# EUROPÄISCHE PATENTANMELDUNG

(11) **EP 0 993 230 A2**
(43) Veröffentlichungstag der Anmeldung: **12.04.2000**
(21) Anmeldenummer: 99203268.0
(22) Anmeldetag: 06.10.1999
(51) Int. Cl.: H04R 5/02

(54) **Beschallte Kopflehne für Kraftfahrzeuge**

(30) Priorität: 07.10.1998 IT BZ980059
(71) Anmelder: Mantinger, Karl, I-39040 Ora (Bolzano) (IT)
(72) Erfinder: Mantinger, Karl, I-39040 Ora (Bolzano) (IT)
(74) Vertreter: Faraggiana, Vittorio, Dr. Ing.

(57) **Zusammenfassung**

Beschrieben wird eine beschallte Kopflehne für Kraftfahrzeuge oder sonstige Sitze, die mittels einer einstellbaren Stütze mit einem Sitz verbunden ist.

Gemäß der Erfindung ist in der Kopflehne (1) mindestens ein Lautsprecher (4, 5) eingebaut, der in der Nähe des Kopfes (11) eines Benützers angeordnet und wirksam mit einer Stromsignalquelle (14, 19) verbunden ist.

## Beschreibung

Die vorliegende Erfindung bezieht sich auf eine beschaute Kopflehne für Kraftfahrzeuge oder Sessel im allgemeinen gemäß dem Oberbegriff des Anspruch 1.

Die jetzigen in Kraftfahrzeugen verwendeten Stereoanlagen herkömmlicher Art sind mit Lautsprechern ausgestattet, die an verschiedenen Punkten des Fahrraumes angebracht sind. Durch die Tatsache, daß die Lautsprecher des linken und rechten Stereokanals nicht symmetrisch zu den Insassen angebracht sind, ergibt sich eine verfälschte und dem Schwerpunkt verschobene Wiedergabe des Stereoklangbildes, daß heißt, die Verteilung der Stereokanäle wird von den Insassen der rechten und linken Seite, sowie von den Insassen auf dem Rücksitz mit unterschiedlicher Intensität wahrgenommen. Die Lautsprecheranlagen erlauben nicht, auf sie unverzüglich einzuwirken, wenn über eine fest oder lose installierte Funksprechanlage ein Funk oder Telefongespräch geführt wird. Die Anordnung herkömmlicher Art erlaubt schließlich nicht die optimale Ausnutzung der sogenannten elektrodynamischen Wandler polarer Art mit einem Vibrierkörper, so wie beispielsweise im italienischen Patent Nr. 1 276 265, angemeldet am 14.02.1994, erteilt am 28.10.1997 , beschrieben.

Die Aufgabe der vorliegenden Erfindung liegt daher darin, mindestens teilweise die Mängel der Anordnung von Stereoanlagen herkömmlicher Art an Kraftfahrzeugen oder sonstigen Sitzeinrichtungen zu beheben und eine Kopflehne vorzuschlagen, die für eine höchstmögliche Ausleuchtung mittels der abgestrahlten Schallwellen erwirken, wobei sich alle Insassen optimal im Stereodreieck befinden, indem die Stereolautsprecher nach vorne als auch nach hinten zu den Rücksitzen den Schall abstrahlen.

Eine weitere Aufgabe liegt darin, die Möglichkeit vorzusehen, wechselweise zu einem Anhören der Stereoanlage, das Anhören ankommender Telefongespräche zuzuschalten.

Diese und weitere Aufgaben werden durch eine beschallende Kopflehne mit den im kennzeichnenden Teil des Anspruches 1 angegebenen Merkmahlen gelöst.

Indem mindestens ein Lautsprecher innerhalb der Polsterung der Kopflehne eingebaut wird, wird diese beschallt, indem sie Schallwellen mit Wirksamkeit in der Nähe des Benutzers aussendet. Eine optimale Wirksamkeit und eine naturgetreue und ausgewogene Wiedergabe in Stereoqualität mit einem Mindestmaß an Klangverzerrungen werden erreicht, wo ein Lautsprecherpaar in der Kopflehne in unmittelbaren Nähe der Ohren angebracht sind.

Bevorzugter Weise werden als Lautsprecher die oben genannten Wandler verwendet, die im wesentlichen in einwandfreier Wiedergabetreue die Aufnahme oder den Originalton widerspiegeln.

In einer bevorzugten Ausführungsform sind die Lautsprecher der Kopflehne elektrisch mit der Stereoanlage über mindestens einen durch die höhenverstellbare Stütze der Kopflehne hergestellten Schleifkontakt verbunden, wobei in den Sitzen der Stützstäbe der Kopflehne die in ihnen gleitbaren Stäbe zu der genannten Einstellung an auf den Stäben vorgespannten Blattfedern zum Gleiten gebracht werden.

In einer weiteren Ausführung sind eine Stereoanlage und eine Funksprechanlage mit den Lautsprechern über einen Wechselschalter verbunden. Bevorzugter Weise ist der Wechselschalter so ausgeführt, daß ein Funksprechsignal erkannt wird, um auf die Funksprechanlage umzuschalten und die Stereoanlage auszuschließen.

Um die Telefonmitteilungen ohne Verwendung der Hände (hands free) zu ermöglichen, ist die Kopflehne zweckmäßiger Weise mit einem schwenkbaren bzw. aus der Kopflehne ausfahrenden Mikrofon versehen, das mit der Funksprechanlage wirksam verbunden ist.

Um die Diffusion der Schallwellen zu drosseln , kann in der Nähe eines jeden Lautsprechers eine bewegliche Schallblende vorgesehen sein, um die Schallwellen richtungsmäßig abzuschirmen. So besteht die Möglichkeit, die Schallwellen in die gewollte Richtung zu leiten bzw. auszurichten.

Weitere Einzelheiten und Merkmale gehen aus der folgenden Beschreibung einer bevorzugten, in der beigefügten Zeichnung dargestellten Ausführungsform hervor. Es zeigen,
Figur 1 schematisch eine erfindungsgemäße Kopflehne in Vorderansicht mit inneren Einzelheiten teilweise in Sicht und eine vergrößerte, daneben gezeigte Einzelheit;
Figur 2 schematisch die Kopflehne in Vorderansicht mit inneren Einzelheiten teilweise in Sicht; und
Figur 3 ein elektrisches Schaltschema zwischen Anlagen und Verbrauchern.

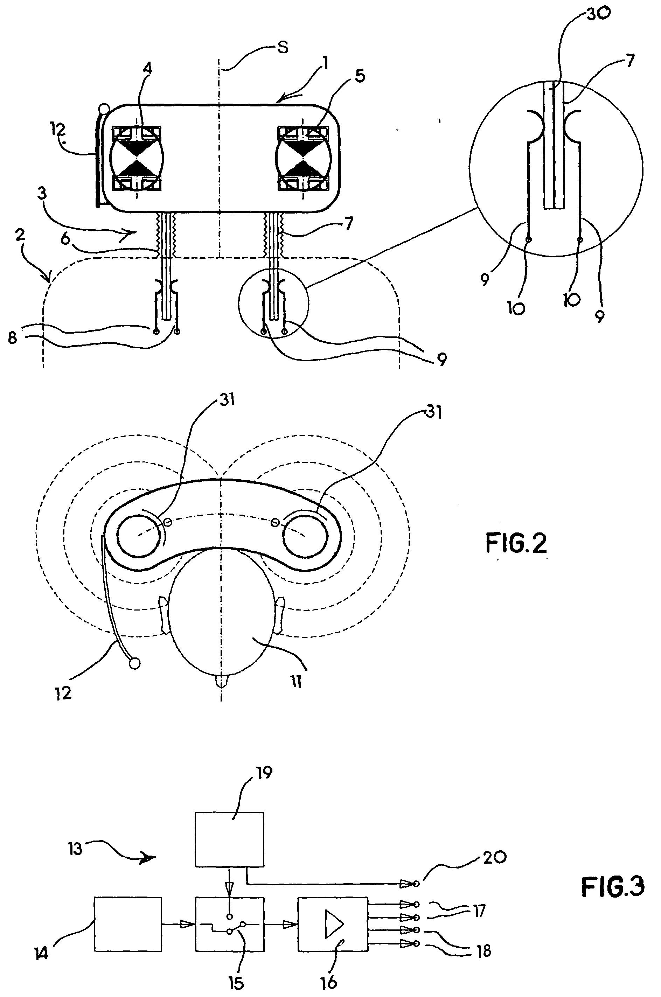

In Figur 1 und 2 ist eine Kopflehne 1 dargestellt, mit der ein nicht gezeigter Sitz eines Kraftfahrzeuges oder sonstiger Sessel versehen ist, oberhalb einer Rückenlehne 2 mittels einer Stütze 3.

Gemäß der Erfindung sind in der Kopflehne 1 ein Lautsprecher 4 und ein Lautsprecher 4 eingebaut, die voneinander gegenüber einer vertikalen Symmetrieachse S der Kopflehne 1 mit gleichem Abstand angeordnet sind.

Jeder Lautsprecher ist bevorzugter Weise polarer Art mit kugelförmiger Abstrahlung der Schallwellen.

Die Stütze 3 ist durch zueinander parallelen Stäben 6 und 7 gebildet, die an ihren oberen Enden an der Kopflehne 1 befestigt sind. Die Stäbe sind in einem elektrisch leitfähigem Material ausgeführt und über Stromleitungen jeweils mit dem Lautsprecher 4 und 5 verbunden. Jeder Stab 6, 7 ist durch einen Isolierüberzug 30 elektrisch isoliert und verwirklicht für jeden Kontakt eine Signalleitung.

Die unteren Abschnitte der Stäbe 6 und 7 sind hingegen oben in der Rückenlehne 2 aufgenommen. Zu diesem Zwecke sind entsprechende zueinander parallele, im Rückenlehne 2 ausgenommene Sitze mit elektrisch leitfähigen Blattfedern 8 bzw. 9 ausgestattet, die in 10 im Inneren der Rückenlehne 2 befestigt sind und den in ihnen eingeführten Teil der Stäbe 6 und 7 elastisch belasten.

An der Kopflehne 1 ist weiteres in der Nähe des Kopfes 11 eines Benutzers ein klappbares bzw. auszieh- oder elektrisch ausfahrbares Mikrofon 12 befestigt, das ebenfalls mit der Rückenlehne 2 über Leitungen elektrisch verbunden ist.

In der Figur 3 zeigt der elektrische Schaltplan eine mögliche Wirkverbindung zwischen Anlagen und Verbrauchern, die im vorliegendem Fall durch die Lautsprecher 4 und 5 und das Mikrofon 12 gebildet sind.

Ein Schaltkreis 13 umfaßt eine Stereoanlage 14, die über einen Wechselschalter 15, einen Verstärker 16 mit einer Verbindungsleitung 17 und eine Verbindungsleitung 18 elektrisch verbunden ist. Die Verbindungsleitung 17 führt z. B. zum Lautsprecher 4, indem sie durch den Stab 6 geleitet ist, während die Verbindungsleitung 18 zum Lautsprecher 5 führt, indem sie durch den Stab 7 geleitet ist.

Der Schaltkreis 13 umfaßt überdies eine Funksprechanlage 19, die fähig ist, aktiv auf den Wechselschalter 15 zu wirken, um die Stereoanlage 14 im Falle auszuschließen, wenn die Funksprechanlage zu aktivieren ist, um deren Signale über Funk oder Kabel an eine Verbindungsleitung 20 an das Mikrofon 12 und über die Leitungen 17 und 18 an die Lautsprecher 4 und 5 zu senden.

Wahlweise ist jede Lautsprechergruppe 4 und 5 mit einem Lautstärken- und einem Balance-Regler versehen. Diese Einstellung ist bevorzugter Weise im Bereich der einzelnen Kopflehnen selbst vorgesehen.

Bevorzugter Weise ist innerhalb der Kopflehne eine halbmondförmig gekrümmte Schallblende 31 geführt, die dazu bestimmt ist, teilweise die durch den entsprechenden Lautsprecher ausgestrahlten Schallwellen einstellbar abzuschirmen bzw. die Schallwellen in eine bestimmte Richtung zu lenken.

Außer der beschriebenen Möglichkeiten, weist die erfindungsgemäße Kopflehne den Vorteil auf, daß mit einer Kopflehne herkömmlicher Art einfach und schnell ausgetauscht werden kann.

## Patentansprüche

1. Beschaute Kopflehne für Kraftfahrzeuge oder sonstige Sitze, die mittels einer einstellbaren Stutze mit einem Sitz verbunden ist, dadurch gekennzeichnet, daß in der Kopflehne (1) mindestens ein Lautsprecher (4, 5) eingebaut ist, der in der Nähe des Kopfes (11) eines Benützers angeordnet und wirksam mit einer Stromsignalquelle (14, 19) verbunden ist.

2. Kopflehne nach Anspruch 1, dadurch gekennzeichnet, daß zwei Lautsprecher (4, 5) vorgesehen sind, die gegenüber einer vertikalen Symmetrieebene S der Kopflehne (1) symmetrisch angeordnet sind.

3. Kopflehne nach den vorstehenden Ansprüchen, dadurch gekennzeichnet, daß die Lautsprecher (4, 5) polarer Art sind.

4. Kopflehne nach den vorstehenden Ansprüchen, dadurch gekennzeichnet, daß die Lautsprecher (4, 5) der Kopflehne (1) mit einer Stereoanlage (14) über einen Schleifkontakt elektrisch verbunden sind, der durch eine höhenverstellbare Stütze (3) der Kopflehne (1) verwirklicht ist, wobei in den Sitzen von Stützstäben (6, 7) der Kopflehne die elektrisch leitfähigen, in ihnen gleitbaren Stäbe (6, 7) für diese Einstellung durch Blattfedern (8, 9) federnd belastet sind.

5. Kopflehne nach den vorstehenden Ansprüchen, dadurch gekennzeichnet, daß eine Stereoanlage (14) und eine Funksprechanlage mit den Lautsprechern (4, 5) über einen Wechselschalter (15) verbunden sind.

6. Kopflehne nach Anspruch 5, dadurch gekennzeichnet, daß der Wechselschalter (15) derart ausgeführt ist, daß er ein Funksprechsignal wahrnimmt, um auf die Funksprechanlage (19) geschaltet zu werden und die Stereoanlage auszuschließen.

7. Kopflehne nach den vorstehenden Ansprüchen, dadurch gekennzeichnet, daß die Kopflehne (1) mit einem Mikrofon (12) versehen ist, das wirksam mit der Funksprechanlage (19) verbunden ist.

8. Kopflehne nach den vorstehenden Ansprüchen, dadurch gekennzeichnet, daß innerhalb der Kopflehne (1) in der Nähe eines jeden Lautsprechers (4, 5) eine Schallblende (31) angeordnet ist, welche die Schallwellen richtungsmäßig abschirmen.

9. Kopflehne nach den vorstehenden Ansprüchen, dadurch gekennzeichnet, daß jede Gruppe von Lautsprechern (4, und 5) mit einem Lautstärke- und Balance- Regler versehen ist.

10. Kopflehne nach Anspruch 7, dadurch gekennzeichnet, daß das Mikrofon (12) an einem Halter befestigt ist, der von Hand bzw. durch einen Antrieb von einer ausgezogenen Stellung für die Mikrofonbenutzung in eine unwirksame ruhende Stellung des Mikrofons gebracht werden kann, in welcher der Halter samt Mikrofon teilweise oder komplett in der Kopflehne aufgenommen wird.

11. Kopflehne nach den vorstehenden Ansprüchen, dadurch gekennzeichnet, daß die Telefonsprechanlage oder Funkempfänger samt Umschaltmechanismus (15) in der Kopflehne (1) integriert ist.

12. Kopflehne nach den vorstehenden Ansprüchen, dadurch gekennzeichnet, daß in ihr Verstärker eingebaut sind.
